# EUROPÄISCHE PATENTSCHRIFT

(11) **EP 0 686 798 B1**
(45) Veröffentlichungstag und Bekanntmachung des Hinweises auf die Patenterteilung: **08.07.1998**
(21) Anmeldenummer: 95107001.0
(22) Anmeldetag: 09.05.1995
(51) Int. Cl.: F16L 17/08, F16L 37/30

(54) **Steckkupplung**
Plug-in connection
Raccord à fiche

(30) Priorität: 06.06.1994 DE 4419777
(43) Veröffentlichungstag der Anmeldung: 13.12.1995
(73) Patentinhaber: CARL KURT WALTHER GmbH & Co. KG, 42327 Wuppertal (DE)
(72) Erfinder: Ricken, Norbert, D-44797 Bochum (DE)
(74) Vertreter: Rieder, Hans-Joachim, Dr.

(56) Entgegenhaltungen:
- WO-A-90/14547
- GB-A- 925 352
- GB-A- 2 183 310
- GB-A- 2 230 070
- US-A- 4 637 470
- US-A- 4 854 615

## Beschreibung

Die Erfindung bezieht sich auf eine aus Patrizenteil und Matrizenteil bestehende Steckkupplung, insbesondere zum Verbinden von flüssige Medien führenden Leitungen, welche Steckkupplung im Bereich der Stoßstelle zwischen Patrizenteil und Matrizenteil eine metallische Ringdichtung aufweist, die in ihrem Querschnitt zufolge ihrer Anordnung und eines Mantelflächen-Spaltes vom unter Druck stehenden Medium aufweitbar ist und sich dabei teilweise am Patrizenteil und teilweise am Matrizenteil abstützt, und welche Ringdichtung mit ihrem Spalt radial einwärts zeigt.

Durch die US-PS 4 854 615 ist es an einer Steckkupplung bekannt, die Ringdichtung mit ihrem Spalt direkt in die Steckfuge zu richten. Die Ringdichtung lagert in einer stirnseitigen Ausdrehung, so daß sie sich in gekuppeltem Zustand der Steckkupplung teilweise am Patrizenteil und teilweise am Matrizenteil abstützt. Der Druck des Mediums begünstigt dabei die dichtende Anlage der metallenen Ringdichtung an den entsprechenden Partien. Eine besondere Sicherung der Ringdichtung liegt nicht vor.

Aus der CA-OS 1 244 756 ist es bekannt, das Patrizenteil der Aufnahmetasche einer Trägerplatte unter axialer Vorspannung zuzuordnen.

Aufgabe der Erfindung ist es, eine gattungsgemäße Steckkupplung herstellungstechnisch einfach und gebrauchs zuverlässig auszubilden.

Gelöst ist diese Aufgabe durch die im Anspruch 1 angegebene Erfindung.

Die daran anschließenden Ansprüche geben weiterbildende Elemente an.

Zufolge solcher Ausgestaltung ist eine gattungsgemäße Steckkupplung erhöhten Gebrauchs- und Sicherheitswerts geschaffen. Das ist vor allem durch Maßnahmen der Sicherung der Ringdichtung begründet. Konkret ist dabei so vorgegangen, daß die am Patrizenteil angeordnete Richtdichtung jenseits der in Steckrichtung liegenden Spalt-Randkante von einer am Patrizenteil angeordneten Ringschulter übergriffen ist, von welcher eine zur Steck-Kupplungsachse abfallend liegende Kegelstumpf-Mantelfläche ausgeht, welcher eine Gegenfläche des Matrizenteils gegenüberliegt, die in eine die Ringdichtung in Einsteckrichtung belastende Stoßfläche einläuft, wobei die Kegelstumpf-Mantelfläche und die Gegenfläche den Mediendurchtritt bis zur Ringdichtung hin gestatten. Die Ringdichtung erhält so eine selbst höheren mechanischen Beanspruchungen standhaltende Fesselung. Auch ist die direkte, das heißt von der Steckfuge her ausgehende Beaufschlagung durch das aufweitende Medium vermieden. Direkt auf den Spalt gehende Restdruckwerte können die Ringdichtung nicht mehr austreiben. Die übergreifende Ringschulter wirkt diesbezüglich sperrend. Die exponierte Kegelstumpf-Mantelfläche - sie kann sogar recht kurz ausgebildet sein - dient der letzten, feinen Zentrierung der Kupplungshälften, also des Matrizenteils am Patrizenteil Die Gegenfläche ist auf die Kegelstumpf-Mantelfläche abgestimmt und läuft in die die Stoßstelle bildende Stoßfläche ein. Sie tritt vorrangig gegen die korrespondierende Stirnfläche des Patrizenteiles, so daß der Mediendurchtritt durch Weitung der Ringdichtung gesichert ist. Dabei ergibt sich überlagernd die Berührung der Ringdichtung an der exponierten Randkante derselben. Der Spalt ist so gewählt, daß er bei sattem Aufsetzen der Stoßfläche des Matrizenteils noch spaltoffen ist. Weiter wird vorgeschlagen, daß die Kegelstumpf-Mantelfläche die Stirnfläche einer in ein Gehäuse des Patrizenteils eingesetzten Buchse ist, deren Außenfläche sich vor dem Spalt erstreckt und daß die Buchse mit einem rückwärtigen Abschnitt in formschlüssiger Eingriffshalterung zum Gehäuse des Patrizenteils steht. Die sich vor dem Spalt erstreckende Außenfläche der Buchse hat praktisch Schild- und damit Schutzfunktion. Die Spalt-Randkanten können nicht an sonst die Gegenfläche bildenden Partien der betreffenden Kupplungshälfte schaben. Günstig ist es dabei weiter, daß die Innenfläche der Buchse, auf einem zentralen Durchflußrohr der als Verschlußkupplung ausgestalteten Steckkupplung sitzt und die Stirnfläche des Durchflußrohres diejenige eines Gegenrohres des Matrizenteiles verschlußventilsteuernd beaufschlagt, von dessen Mantelwand die Gegenfläche jenseits eines Dichtringes spitzwinklig ausgeht. Besagte Rohre sind die Schäfte in Schließrichtung federbelasteter Verschlußorgane. Die gegeneinandertretenden Stirnflächen bewirken das Aufsteuern derselben beim Kupplungsvorgang. Weiter bringt die Erfindung in Vorschlag, daß das Patrizenteil in Steckrichtung vorgespannt ist. Die hieraus resultierende exponierte Stellung des Patrizenteils führt dazu, daß im drucklosen Zustand schon Dichtigkeit vorliegt. Für die entsprechende Vorspannung reichen schon wenige Millimeter, beispielsweise zwei Millimeter. Konkret ist der Aufbau dergestalt, daß die Vorspannung von einem Federpaket gebildet ist, daß einerends auf einer Schulter eines Führungsgehäuses des Patrizenteils sein Widerlager hat und andernends gegen eine Zwischenhülse des Patrizenteils wirkt, welches sich in Entkupplungsstellung an einem ortsfesten Anschlag abstützt. Dabei ist es weiter so, daß die durch das Federpakte gegeneinander verspannte Einheit Zwischenhülse/Patrizenteil zur Kompensation eines Überweges der Stoßfläche über die Dichtung der Ringdichtung hinaus führt. Beim Öffnen der Steckkupplung bleibt die Stoßstelle der Kupplungshälften über die Länge des aus der Vorspannung resultierenden Hubweges noch zusammen. Entsprechend wirkt die Stoßfläche noch dichtend an der Ringdichtung. Schließlich erweist es sich noch als vorteilhaft, daß der Anschlag von einer Stirn eines Schraubringes gebildet ist. Letzteres hat zugleich den Vorteil einer stufenlosen Verstellung des Anschlags, also die Funktion einer Feinjustierung.

Das Federpaket liegt im Medienstrom.

Der Gegenstand der Erfindung ist nachstehend anhand eines zeichnerisch veranschaulichten Ausführungsbeispiels näher erläutert. Es zeigt:
- Fig. 1: die erfindungsgemäße Steckkupplung in gekuppeltem Zustand, und zwar in Halbschnitt-Darstellung,
- Fig. 2: eine Herausvergrößerung des mit A bezeichneten Bereichs der Steckkupplung,
- Fig. 3: die Steckkupplung als Hablschnitt in entkuppeltem Zustand und
- Fig. 4: eine der Herausvergrößerung gemäß Figur 2 entsprechende Darstellung mit in Querschnittsgrundstellung befindlicher Ringdichtung.

Die sowohl als Durchgangskupplung als auch - wie dargestellt - als Verschlußkupplung realisierbare Steckkupplung umfaßt ein Patrizenteil P und ein Matrizenteil M.

Die einer etwa mittigen Stoßstelle 1 der Steckkupplung abgewandten Enden beider Teile gehen in je eine Leitung 2 bzw. 3 über. Letztere führen das die Steckkupplung durchströmende Medium 4. Das Medium 4 kann/soll unter Druck stehen.

Beide Kupplungshälften, also das Patrizenteil P und das Matrizenteil M sind je einem Träger zugeordnet. Letztere lassen sich fremdgesteuert sowie linear geführt gegeneinander fahren und voneinander abheben. Solche Träger können mehrere Patrizenteile und Matrizenteile aufweisen im Sinne einer sogenannten Multikupplung.

Das Patrizenteil P besitzt ein längliches, rotationssymmetrisch gestaltetes Gehäuse 5. Das lagert in der Höhlung 6 eines Führungsgehäuses 7. Letzteres kann schon identisch mit dem erwähnten Träger sein.

Sowohl in gekuppelter Stellung als auch in entkuppelter Stellung ragt der äußere, plane Abschnitt einer Stirnfläche 8 des Patrizenteil-Gehäuses 5 über die im gleichen Sinne ebene Außenfläche 9 des Führungsgehäuses 7 in Richtung der Stoßstelle 1 vor. In entkuppelten Zustand ist der entsprechende Vorstand zufolge axialer Verschieblichkeit des Patrizenteils P größer.

In gleicher Weise besitzt das Matrizenteil M ein Gehäuse 10. Letzteres steckt aber axial unverlagerbar in einer Höhlung 11 eines Aufnahmeteils 12, welches auch hier identisch mit dem erwähnten Träger sein kann.

Das Matrizenteil-Gehäuse 10 ist rotationssymmetrisch ausgebildet und ragt mit seiner Stirnfläche über die dortige stoßstellenseitige Außenfläche 13 vor. Die diesbezügliche Stirnfläche fungiert als Stoßfläche 14 zur betrieblichen einwärts gerichteten Axialverlagerung des Patrizenteil-Gehäuses 5. Dieses ist in Steckrichtung x des Patrizenteils P gehend vorgespannt. Hierzu dient ein rückwärtig des Patrizenteils P angeordnetes Federpakte 15.

Der innere Abschnitt der Stirnfläche 8 weist eine stufenbildende Ausdrehung 16 auf. Letztere ist in Steckrichtung x und radial einwärts gerichtet offen. Besagte Ausdrehung 16 nimmt im Bereich der Stoßstelle 1 zwischen Patrizenteil P und Matrizenteil M eine metallische Ringdichtung D auf. Sowohl im rotationssymmetrischen Umlauf liegt Ringform vor als auch im Querschnitt. Der Querschnitt ist praktisch kreisringförmig. Der Ring ist offen. Er weist in der Mittelebene resp. Diametralen einen Spalt 17 auf. Besagter Spalt geht durch die gesamte Wandungsdicke des Ringguerschnitts und schließt so an den röhrchenförmigen Raum 18 der Ringdichtung Dan. Die Ringdichtung D kann daher durch unter Druck stehendes Medium 4 aufgeweitet werden, so daß die spaltnahen Mantelflächenabschnitte in Kupplungsstellung und Mediendurchtritt sich fest einerseits gegen die erwähnte Stoßfläche 14 und andererseits die eine Stufe bildende Fläche 19 der Außendrehung 16 legen.

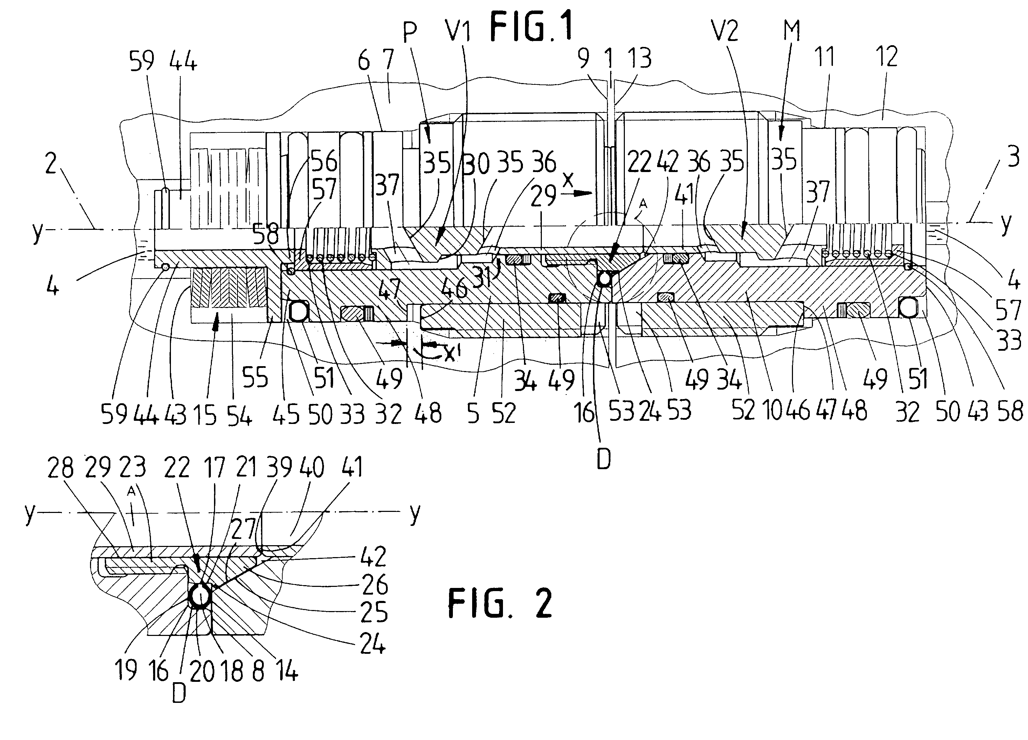

Der dem Spalt 17 diametral gegenüberliegende konvexe Scheitel der Ringdichtung D stützt sich an der dortigen Ringflanke 20 der Ausdrehung 16 ab. Die teilweise am Patrizenteil P und teilweise am Matrizenteil M erfolgende Abstützung geht besonders deutlich aus der Herausvergrößerung A, also Figur 2 hervor.

Die spaltnahen Mantelflächenabschnitte selbst sind keinem axial verschieblichen Abschnitt der Kupplungshälften zugeordnet, sondern einem stehenden Abschnitt. Dieser stehende Abschnitt ist eine Außenfläche 21 einer Buchse 22. Letztere steht mit einem rückwärtigen Abschnitt 23 in formschlüssiger Eingriffshalterung zum Patrizenteil-Gehäuse 5. Es handelt sich um eine Schraubverbindung mit Anschlagbegrenzung am inneren Abschnitt der Fläche 19 der Ausdrehung 16.

Die Buchse 22 bildet zugleich das Fesselungselement für die Ringdichtung D. Die wird nämlich jenseits der in Steckrichtung x liegenden Spaltrandkante partiell von einer Ringschulter 24 eines entsprechend querschnittsvergrößerten Kopfendes der Buchse 22 überfangen. Die deutlich über die Außenfläche 21 nach auswärts hinausgehende Ringschulter 24 verengt den Bereich zwischen dieser und dem Ansatz der Stirnfläche 8 unter das Maß des in Grundstellung zurückgefederten Ringkörpers der Ringdichtung D.

Die Ringschulter 24 verläuft in einem Winkel von ca. 45° zur Steckkupplungs-Achse, nämlich der Längsmittelachse y-y der Steckkupplung.

Von der peripheren Ringkante der Ringschulter 24 geht eine Kegelstumpf-Mantelfläche 25 aus. Diese nimmt einen Winkel von ca. 30° zur besagten Längsmittelachse y-y ein. So entsteht ein zentrierend wirkender Patrizenteil-Kopf 26. Dessen Kegelstumpf-Mantelfläche wirkt mit einer passenden Gegenfläche 27 des Matrizenteils M. zusammen, welche in die die Ringdichtung D entgegen der Steckrichtung x belastende, plane Stoßfläche 14 einläuft. Die Abmessungen sind dabei so getroffen, daß die Stoßfläche 14 vorrangig gegen die korrespondierende Stirnfläche 8 des Patrizenteils P tritt, so daß die Kegelstumpf-Mantelfläche 25 und die konturangepaßte Gegenfläche 27 den Mediendurchtritt bis zur Ringdichtung D hin zulassen. Es verbleibt ein feiner, trichterförmiger Ringspalt zwischen die beiden genannten Flächen, so daß das unter Druck stehende flüssige Medium 4 unter Umlaufen des Mantelflächenabschnitts der freiliegenden Ringhälfte mit einer Komponente aufweitend in den Raum 18 gelangt.

Kegelstumpf-Mantelfläche 25 und Stirnfläche 8 schließen einen stumpfen Winkel Alpha ein. In diesen Winkelraum stellt sich der in Steckrichtung liegende Wandungsabschnitt der Ringdichtung aufgrund seiner Rückstellkraft und einer gewissen Vorspannung vor (vergleiche Figur 4).

Der durch die Ringschulter 24 definierte Überstand z (Fig. 4) beträgt wenige Millimeter. Unter Berührung mit der Stoßfläche 14 und Eindrücken des entsprechenden Abschnitts der Ringdichtung D beginnt schon die Dichtung. Der Spalt 17 ist, wie schon angedeutet, so bemessen, daß er bei Auftreffen der Stoßfläche 14 auf die Stirnfläche 8 nicht geschlossen wird, vergleiche Figur 2.

Die Buchse 22 ist zentral zylindrisch gehöhlt. Auf der so gebildeten Innenfläche 28 führt sich ein zentrales Durchflußrohr 29 der Steckkupplung. Das Durchflußrohr 29 ist der Schaft eines entgegen Federbelastung verlagerbaren Ventilkörpers eines Verschlußventils V1. Ein dem Ventilkörper angeformter Kragen 30 wirkt mit einer Anschlagschulter 31 des Patrizenteil-Gehäuses 5 zusammen. Die den Ventilkörper belastende Druckfeder heißt 32. Sie erstreckt sich im Rücken des Ventilkörpers und stützt sich gehäusefest an einer Widerlagerfläche 33 ab.

Der Ventilkörper des Verschlußventils V1 arbeitet mantelwandseitig mit einem Dichtungsring 34 des Patrizenteil-Gehäuses 5 zusammen.

Zwischen einer in Steckrichtung x ausspitzenden Kegelfläche 35 des Ventilkörpers und der durch den Dichtungsring 34 definierten Dichtungsebene des Durchflußrohres 29 befinden sich Durchströmöffnungen 36. Ebensolche 37 liegen im Rücken des Ventilkörpers, welcher dort ebenfalls in eine in Gegenrichtung zu x ausspitzende Kegelfläche 35 übergeht. Auf diese Weise kann in der gekuppelten Stellung gemäß Figur 1 der sonst schließend wirkende Ventilkörper des Verschlußventils V1 peripher umströmt werden.

Die entsprechende Freigabestellung dieses Verschlußventils V1 ergibt sich im Zuge des Kuppelns der beiden Kupplungshälften, da das Durchflußrohr 29 in Steckrichtung vor- bzw. freisteht. Es bildet mit seinem freistehenden Ende, genauer mit seiner externen Stirnfläche 39 ein Steuerorgan. Die Steuerfläche 39 des Durchflußrohres 29 arbeitet mit einer Stirnfläche 40 eines Gegenrohres 41 des Matrizenteiles M zusammen. Das Gegenrohr 41 ist gleichfalls Bestandteil eines dortigen Ventilkörpers, welcher ein Verschlußventil V2 bildet. Letzteres ist, bis auf eine kürzere Rohrlänge, so aufgebaut, wie das Verschlußventil V1 des Matrizenteils P. Die Bezugsziffern sind daher sinngemäß angewandt; auf eine textliche Wiederholung ist verzichtet.

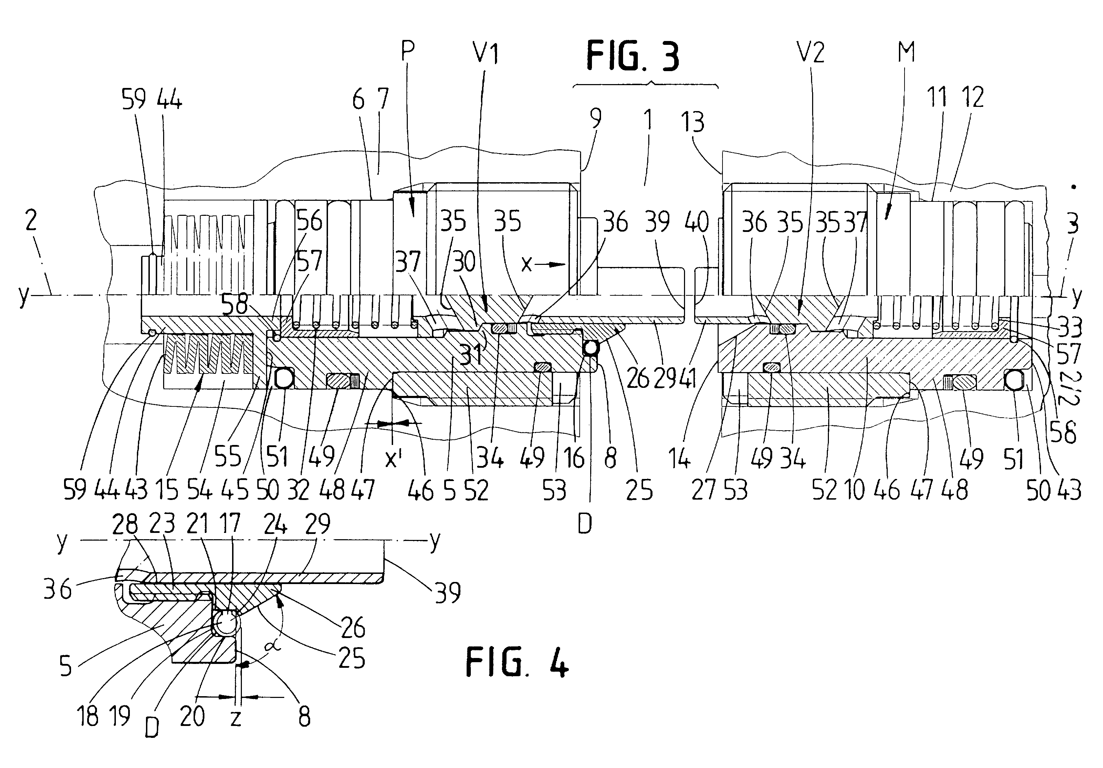

In gekuppelter Stellung (Fig. 1) haben die Ventilköper von ihren Ventilsitzflächen abgehoben durch Gegeneinandertreffen der steuernd wirkenden Stirnflächen 39 und 40. Der Strömungsweg ist so freigegeben. Die Stirnflächenfuge erstreckt sich in der Ebene eines sie umgebenden Verteiler-Ringspaltes 42. Der wird gebildet durch Abstumpfen des Patrizen-Kopfes 26. Dessen Stirnende liegt gegenüber der Stirnfläche 39 zurückversetzt (vergl. Fig. 3) , während die Gegenfläche 27 den Bereich des Verteiler-Ringspaltes 42 überbrückt und in die Mantelfläche des Gegenrohres 41 einläuft. So kann die die Ringdichtung aufweitende Komponente des unter Druck stehenden Mediums 4 auf die Ringdichtung D im Sinne der erwähnten Aufweitung wirken. Die Außenkanten der die Stirnflächen 39 und 40 bildenden Rohrabschnitte sind gefast oder konvex gerundet. Zur Erhöhung des Durchströmeffektes im Bereich des Ringspaltes 42 können die Stirnflächen gegebenenfalls radial genutet sein.

Ein zweiter Komponentenzulauf ergibt sich über die Außenseite der Buchse 22 unter Nutzung des Gewindeweges, bei entsprechender Durchlässigkeit der Ausdrehungs-Fläche 19 natürlich. Im Zuge der Herbeiführung der gekuppelten Stellung wird das Patrizenteil P aus einer abgefederten Vorstandslage durch das selbst unverschiebliche Matrizenteil M entgegen der Steckrichtung x verlagert.

Das die entsprechende Vorspannung bildende Federpaket 15 findet auf einer Schulter 43 des Führungsgehäuses 7 sein Widerlager. Andernends wirkt das vorgespannte Federpaket 15 gegen eine Zwischenhülse 44, welche, in Richtung der Leitung 2 gesehen, koaxial an das Patrizenteil-Gehäuse 5 anschließt. Sie (44) stützt sich am dortigen Stirnende 45 des Patrizenteiles P ab.

Das Patrizen-Gehäuse 5 ist in seiner federbelasteten Vorstandslage begrenzt durch einen Anschlag 46, gegen den die korrespondierende Ringfläche 47 eines durchmessergrößeren Bundes 48 des Patrizen-Gehäuses 5 tritt. Der Bund 48 nimmt in einer peripheren Nut einen Dichtungsring 49 auf, welcher als Gegenfläche mit der Innenwandung der Höhlung 6 des Führungsgehäuses 7 zusammenwirkt. In einer rückwärtigen Ausdrehung 50 des Gehäuses 5 liegt eine Metalldichtung 51, gleichfalls mediendruck-aufweitbar.

Der Anschlag 46 ist die entgegen Steckrichtung x gewandte Stirn eines Schraubringes 52, welcher im Eingangsbereich der Höhlung 6 ein passendes Innengewinde für sein Außengewinde findet. Durch mehr oder weniger tiefes Eindrehen kann der Anschlag 26 feinjustiert werden. Im Bereich der anderen, auswärts gerichteten Stirn befinden sich Angriffsvertiefungen 53 für ein Werkzeug. Die zylindrische Innenfläche des Schraubringes 52 setzt die führende Wirkung der Höhlung 6 fort.

Die das Federpaket 15 aufnehmende Federkammer 54 findet ihren in Steckrichtung x liegenden Abschluß durch eine Ringwand 55. Letztere setzt auf der Mantelfläche der Zwischenhülse 44 einstückig an und überdeckt schließend mit radilem Spiel die Ausdrehung 50.

Wie der zeichnerischen Darstellung entnehmbar, setzt sich die Zwischenhülse 44 über das Stirnende 45 des Gehäuses 5 hinausgehend fort. Dieser überlappende Fortsatz 56 reicht bis zu einer die Lagerfläche 33 bildenden, die Feder 32 aufnehmenden Traghülse 57. Letztere weist L-Profil auf und wird gegen Austritt durch einen Haltering 58 gestützt. Letzterer findet durch den Fortsatz 56 eine strömungsfreie Überbrückung.

Ein zweiter Haltering 59 am auswärts gerichteten Ende der Zwischenhülse 44 vermeidet das Abrutschen des aufgefädelten, aus einzelnen Tellern bestehenden Federpaketes 15.

Bezüglich des Matrizenteiles M liegt hinsichtlich der Traghülse, also des Gehäuses 10 etc. eine gleiche Ausgestaltung vor. Die Bezugsziffern sind sinngemäß angewandt. Das gleiche gilt auch im Hinblick auf die Zuordnung eines Schraubringes 52 zur Fesselung des Matrizenteil-Gehäuses 10. Hier ist aber der am Patrizenteil P einen Freigang x' bringende Abstand zwischen dem Anschlag 46 und der Ringfläche 47 nicht gegeben. Vielmehr wird der Bund 48 des gleichförmigen Matrizenteil-Gehäuse 10 unverschieblich gefesselt. Besagter Bund 48 ist zwischen dem Anschlag 46 und der Schulter 43 eingespannt gehalten. Die Dichtungsmittel sind hier gleicher Art. Im Stoßbereich der Kupplungshälften befinden sich weitere Dichtringe 49 zwischen der Innenseite der Schraubringe 52 und der Mantelwand der Gehäuse 5 und 10.

Die Funktion ist, kurz zusammengefaßt, wie folgt: Unter ausgerichtetem Annähern der Träger von Patrizenteil P und Matrizenteil M kommt es zu einer Berührung der exponierten Partien bei Kupplungshälften. Das führt zu einem Öffnen der Verschlußventile V1 und V2, einhergehend mit dem Einfahren des Patrizen-Kopfes 26 in die korrespondierende, trichterförmige Matrizen-Höhlung, gebildet von der Gegenfläche 27. Die Stoßfläche 14 gelangt zur schon dichtend wirkenden Anlage an der exponierten Zone der Ringdichtung D, welche entgegen ihrer Rückstellkraft belastet wird. Schließlich tritt die Stoßfläche 14 gegen die Stirnfläche 8 des Patrizenteils P. Die Bewegung setzt sich fort entgegen der Kraft des beschriebenen Kraftspeichers, also des vorgespannten Federpakets 15. Die durch das Federpaket 15 gegeneinander verspannte Einheit Zwischenhülse/Patrizenteil 44/P führt zur Kompensation eines Überweges der Stoßfläche 14 über die Dichtung der Ringdichtung D hinaus. Die aus der Vorspannung und dem entsprechenden Freigang x' resultierende Voreilung führt dazu, daß die Verschlußkupplung auch in drucklosem Zustand dicht ist. Sie läßt sich so als drucklose Rückflußleitung nutzen.

## Patentansprüche

1. Aus Patrizenteil (P) und Matrizenteil (M) bestehende Steckkupplung, insbesondere zum Verbinden von flüssige Medien (4) führenden Leitungen (2,3), welche Steckkupplung im Bereich der Stoßstelle (1) zwischen Patrizenteil (P) und Matrizenteil (M) eine metallische Ringdichtung (D) aufweist, die in ihrem Querschnitt zufolge ihrer Anordnung und eines Mantelflächen-Spaltes (17) vom unter Druck stehenden Medium (4) aufweitbar ist und sich dabei teilweise am Patrizenteil (P) und teilweise am Matrizenteil (M) abstützt, und welche Ringdichtung (D) mit ihrem Spalt (17) radial einwärts zeigt, dadurch gekennzeichnet, daß die am Patrizenteil (P) angeordnete Ringdichtung (D) jenseits der in Steckrichtung (Pfeil x) liegenden Spalt-Randkante von einer am Patrizenteil (P) angeordneten Ringschulter (24) übergriffen ist, von welcher eine zur Steckkupplungs-Achse (y-y) abfallend liegende Kegelstumpf-Mantelfläche (25) ausgeht, welcher eine Gegenfläche (27) des Matrizenteils (M) gegenüberliegt, die in eine die Ringdichtung (D) in Einsteckrichtung (x) belastende Stoßfläche (14) einläuft, wobei die Kegelstumpf-mantelfläche (25) und die Gegenfläche (27) den Mediendurchtritt bis zur Ringdichtung (D) gestatten.

2. Steckkupplung nach Anspruch 1, dadurch gekennzeichnet, daß die Kegelstumpf-Mantelfläche (25) die Stirnfläche einer in das Gehäuse (5) des Patrizenteiles (P) eingesetzten Buchse (22) ist, deren Außenfläche (21) sich vor dem Spalt (17) erstreckt und daß die Buchse (22) mit einem rückwärtigen Abschnitt (23) in formschlüssiger Eingriffshalterung zum Gehäuse (5) des Patrizenteils (P) steht.

3. Steckkupplung nach den Ansprüchen 1 und 2, dadurch gekennzeichnet, daß die Innenfläche (28) der Buchse (22) auf einem zentralen Durchflußrohr (29) der als Verschlußkupplung ausgestatteten Steckkupplung sitzt und die Stirnfläche (39) des Durchflußrohres (29) diejenige (40) eines Gegenrohres (41) des Matrizenteiles (M) verschlußventilsteuernd (Verschlußventile V1,V2) beaufschlagt, von dessen Mantelwand die Gegenfläche (27) jenseits eines Dichtringes (34) spitzwinklig ausgeht.

4. Steckkupplung nach einem oder mehreren der vorhergehenden Ansprüche, dadurch gekennzeichnet, daß das Patrizenteil (P) in Steckrichtung (x) vorgespannt ist.

5. Steckkupplung nach Anspruch 4, dadurch gekennzeichnet, daß die Vorspannung von einem Federpaket (15) gebildet ist, das einerends auf einer Schulter (43) eines Führungsgehäuses (7) des Patrizenteils (P) sein Widerlager hat und andernends gegen eine Zwischenhülse (44) des Patrizenteils (P) wirkt, welches sich in Entkupplungsstellung an einem ortsfesten Anschlag (46) abstützt.

6. Steckkupplung nach den Ansprüchen 4 und 5, dadurch gekennzeichnet, daß die durch das Federpaket (15) gegeneinander verspannte Einheit Zwischenstück/Matrizenteil (44/P) zur Kompensation eines Überweges der Stoßfläche über den Hubweg für die Dichtung der Ringdichtung (D) hinausführt.

7. Steckkupplung nach Anspruch 5, dadurch gekennzeichnet, daß der Anschlag (46) von einer Stirn eines Schraubringes (52) gebildet ist.

## Claims

1. Socket-type coupling consisting of male portion (P) and female portion (M), in particular for connecting liquid media (4) conducting pipes (2, 3), which socket-type coupling in the region of the joint (1) between male portion (P) and female portion (M) comprises a metal ring seal (D) which can be expanded in its cross-section by the pressurised medium (4) owing to its arrangement and a peripheral surface gap (17) and in the process is supported partly on the male portion (P) and partly on the female portion (M), and which ring seal (D) with its gap (17) points radially inwards, characterised in that the ring seal (D) arranged on the male portion (P) is overlapped, beyond the edge of the gap located in the direction of insertion (arrow x), by an annular shoulder (24) which is arranged on the male portion (P) and from which extends a frustoconical peripheral surface (25) which slopes down from the axis (y-y) of the socket-type coupling and opposite which is a counter surface (27) of the female portion (M) which runs into a butt face (14) which loads the ring seal (D) in the direction of insertion (x), wherein the frustoconical peripheral surface (25) and the counter surface (27) allow passage of media as far as the ring seal (D).

2. Socket-type coupling according to claim 1, characterised in that the frustoconical peripheral surface (25) is the face of a bush (22) which is inserted in the housing (5) of the male portion (P) and of which the outer surface (21) extends in front of the gap (17) and in that the bush (22) is mounted with a rear section (23) in form-locking engagement with the housing (5) of the male portion (P).

3. Socket-type coupling according to claims 1 and 2, characterised in that the inner surface (28) of the bush (22) is mounted on a central throughflow tube (29) of the socket-type coupling fitted as a closure coupling, and the face (39) of the throughflow tube (29) acts on that (40) of a counter tube (41) of the female portion (M) in a manner controlling closure valves (closure valves V1, V2), from the peripheral wall of which the counter surface (27) extends at an acute angle beyond a sealing ring (34).

4. Socket-type coupling according to one or more of the preceding claims, characterised in that the male portion (P) is biased in the direction of insertion (x).

5. Socket-type coupling according to claim 4, characterised in that the bias is formed by a spring assembly (15) which at one end has its abutment on a shoulder (43) of a guide housing (7) of the male portion (P) and at the other end acts against an intermediate sleeve (44) of the male portion (P) which is supported on a fixed stop (46) in the uncoupled position.

6. Socket-type coupling according to claims 4 and 5, characterised in that the unit comprising intermediate piece/female portion (44/P), which are braced together by the spring assembly (15), for compensation of overtravel of the butt face leads beyond the stroke for sealing of the ring seal (D).

7. Socket-type coupling according to claim 5, characterised in that the stop (46) is formed by a face of a threaded ring (52).

## Revendications

1. Accouplement à enfichage se composant d'une pièce poinçon (P) et d'une pièce matrice (M), en particulier pour relier des conduites (2, 3) conduisant des fluides liquides (4), cet accouplement à enfichage comportant dans la zone de l'emplacement de jointure (1), entre la pièce poinçon (P) et la pièce matrice (M), un organe d'étanchéité annulaire métallique (D) dont la section transversale est susceptible de se dilater sous l'effet du fluide sous pression (4) du fait de sa disposition et d'un intervalle (17) des surfaces d'enveloppe et qui s'appuie en conséquence partiellement sur la pièce poinçon (P) et partiellement sur la pièce matrice (M), l'organe d'étanchéité annulaire (D) étant orienté radialement vers l'intérieur par son intervalle (17), caractérisé en ce que l'organe d'étanchéité annulaire (D) disposé sur la pièce poinçon (P) est recouvert de chaque côté de l'arête de bordure d'intervalle disposée dans la direction d'enfichage (flèche x), par un épaulement annulaire (24) disposé sur la pièce poinçon (P) et d'où part une surface d'enveloppe en tronc de cône (25) convergente vers l'axe d'accouplement (y-y) par enfichage, cette surface d'enveloppe étant située en face d'une contre-surface (27) de la pièce matrice (M), qui est réalisée à l'intérieur d'une surface de jointure (14) venant solliciter l'organe d'étanchéité annulaire (D) dans la direction d'enfichage (x), la surface d'enveloppe en tronc de cône (25) et la contre-surface (27) laissant un passage de fluide jusqu'à l'organe d'étanchéité annulaire (D).

2. Accouplement à enfichage, selon la revendication 1, caractérisé en ce que la surface d'enveloppe en tronc de cône (25) est constituée par la surface frontale d'un manchon (22) inséré dans le corps (5) de la pièce poinçon (P), et dont la surface extérieure (21) s'étend devant l'intervalle (17) et en ce que le manchon (22) est retenu par un tronçon arrière (23) en liaison de contact par ajustement de forme, par rapport au corps (5) de la pièce poinçon (P).

3. Accouplement à enfichage, selon les revendications 1 et 2, caractérisé en ce que la surface intérieure (28) du manchon (22) est en appui sur un tube central de passage (29) de l'accouplement à enfichage équipé d'un accouplement d'obturation et en ce que la surface frontale (39) du tube de passage (29) agit sur la surface frontale (40) d'un contre-tube (41) de la pièce matrice (M) pour réaliser une commande de valve d'obturation (valves d'obturation V1, V2), la contre-surface (27) partant à angle aigu de la paroi d'enveloppe du contre-tube au-delà d'une bague d'étanchéité (34).

4. Accouplement à enfichage selon l'une ou plusieurs des revendications précédentes, caractérisé en ce que la pièce poinçon (P) cst précontrainte dans la direction d'enfichage (x).

5. Accouplement à enfichage selon la revendication 4, caractérisé en ce que la précontrainte est obtenue à l'aide d'un paquet ou empilement de ressorts (15) qui, d'une part s'appuie sur un épaulement (43) d'un boîtier de guidage (7) de la pièce poinçon (P) et d'autre part, agit contre un manchon intermédiaire (44) de la pièce poinçon (P), ce manchon s'appuyant en position désaccouplée sur une butée (46) localement fixe.

6. Accouplement à enfichage selon les revendications 4 et 5, caractérisé en ce que l'unité constituée par la pièce intermédiaire/la pièce matrice (44/P) repoussées en précontrainte l'une contre l'autre par le paquet de ressorts (15), dépasse le trajet de chevauchement pour assurer l'étanchéité de l'organe d'étanchéité annulaire (D), afin de compenser un excès de course de la surface de butée ou d'embout.

7. Accouplement à enfichage selon la revendication 5, caractérisé en ce que la butée (46) est constituée par une partie frontale d'une bague filetée (52).
